# EUROPÄISCHE PATENTSCHRIFT

(11) **EP 1 186 480 B1**
(45) Veröffentlichungstag und Bekanntmachung des Hinweises auf die Patenterteilung: **30.04.2008**
(21) Anmeldenummer: 01119385.1
(22) Anmeldetag: 11.08.2001
(51) Int. Cl.: B60R 21/06

(54) **Schutzvorrichtung zur Sicherung eines Laderaumes in einem Fahrzeuginnenraum**
Protection system for securing a vehicle luggage compartment
Dispositif de protection sécurisant un volume de chargement dans un véhicule

(30) Priorität: 12.09.2000 DE 10044958
(43) Veröffentlichungstag der Anmeldung: 13.03.2002
(73) Patentinhaber: BOS GmbH & Co. KG, 73760 Ostfildern (DE)
(72) Erfinder: Seel, Holger, 71134 Aidlingen (DE); Ehrenberger, Marina, 73730 Esslingen (DE)
(74) Vertreter: Patentanwälte Ruff, Wilhelm, Beier, Dauster & Partner

(56) Entgegenhaltungen:
- EP-A- 0 970 850
- WO-A-98/24660
- DE-A- 19 650 768
- GB-A- 2 321 436

## Beschreibung

Die Erfindung betrifft eine Schutzvorrichtung zur Sicherung eines Laderaumes in einem Fahrzeuginnenraum mit einer in einem Wickelgehäuse drehbar gelagerten Wickelwelle, auf der ein flexibles Flächengebilde ausziehbar und aufrollbar gehalten ist, das in wenigstens eine kurze und wenigstens eine lange Schutzposition ausziehbar und fahrzeugfest verankerbar ist, mit einer Schalteinrichtung zum Auswählen einer der jeweiligen Schutzposition entsprechenden Sollposition des Flächengebildes sowie mit einer Steuereinrichtung, die die Umdrehungen der Wickelwelle erfasst und abhängig von der ausgewählten Sollposition den Auszugweg für das Flächengebilde auf eine entsprechende Länge begrenzt oder für einen vollständigen Auszug freigibt und die eine mechanische Sperrvorrichtung aufweist, die für ein Blockieren der Wickelwelle vorgesehen ist, wobei das Wickelgehäuse an einer klappbaren Rückenlehne angeordnet ist.

Eine Schutzvorrichtung für einen Kombi-Personenkraftwagen ist allgemein bekannt. Die Schutzvorrichtung weist ein als Wickelgehäuse dienendes Kassettengehäuse auf, das an einer Rückseite einer Rückenlehne einer Fondsitzbank lösbar befestigt ist. In dem Kassettengehäuse ist eine Wickelwelle drehbar gelagert, auf der ein flexibles Flächengebilde, vorzugsweise in Form eines Trennnetzes, ausziehbar und aufrollbar gehalten ist. Das Trennnetz ragt durch einen Längsschlitz in dem Kassettengehäuse nach aussen und ist an seinem vorderen Stirnende mit einer Auszugleiste versehen, die in einer vertikal ausgezogenen Schutzposition in fahrzeugfesten Halterungen im Dachbereich des Fahrzeuginnenraumes verankerbar ist. Die Rückenlehne ist sowohl in einer aufrechten Funktionsstellung als auch in einer nach vorne umgeklappten Liegestellung positionierbar. In der umgeklappten Liegestellung ist der Laderaum gegenüber der aufrechten Funktionsposition der Rückenlehne entsprechend vergrössert. Um in beiden Fällen eine Abtrennung des Laderaumes vom übrigen Fahrzeuginnenraum erzielen zu können, weist das Trennnetz eine Länge auf, die so gross gewählt ist, dass das Trennnetz auch in der umgeklappten Liegeposition der Rückenlehne aus dem Kassettengehäuse nach oben ausziehbar und in entsprechenden fahrzeugfesten Halterungen im Dachbereich des Fahrzeuginnenraumes festlegbar ist. Für die aufrechte Funktionsposition der Rückenlehne und die umgeklappte Liegeposition der Rückenlehne sind daher unterschiedliche Auszuglängen für das Flächengebilde in Form des Trennnetzes notwendig, um die jeweilige vertikale Schutzposition einzunehmen.

Aus der DE 196 43 691 C2 ist eine weitere Schutzvorrichtung zur Sicherung eines Laderaumes in einem Fahrzeuginnenraum bekannt, bei der ein auf einer Wickelwelle gehaltenes Trennnetz in einem Kassettengehäuse positioniert ist, wobei das Kassettengehäuse rückseitig an einer Rückenlehne einer Fondsitzbank befestigt ist. Der Wickelwelle ist zusätzlich eine beschleunigungsabhängig wirksame Sperreinrichtung zugeordnet, die bei einem Fahrzeugaufprall, bei dem Gegenstände in das Sicherheitsnetz geschleudert werden, ein Abwickeln des Sicherheitsnetzes sperrt und so einen sicheren Rückhalt durch das Trennnetz erzielt wird.

Die GB 2 321 436 A zeigt eine Rückhaltevorrichtung mit einem auf eine Wickelwelle aufrollbaren Sicherheitsnetz, wobei die Wickelwelle in einem Kassettengehäuse aufgenommen ist, das in einer klappbaren Rückenlehne einer Sitzbank integriert ist. Der Wickelwelle ist eine Blockiereinrichtung zugeordnet, die zumindest in einer Klappstellung der Rückenlehne angesteuert werden kann, um eine Blockierung der Wickelwelle zu erreichen und ein weiteres Abrollen des Sicherheitsnetzes zu verhindern. Für die Ansteuerung der Blockiereinrichtung ist an der Karosserie des Kraftfahrzeugs ein Steuerbolzen vorgesehen, der in einer Position der Rückenlehne in die Blockiereinrichtung eingreift und zu einer Blockierung der Wickelwelle führt.

Aufgabe der Erfindung ist es, eine Schutzvorrichtung der eingangs genannten Art zu schaffen, die in jeder Schutzposition des Flächengebildes beschleunigungsunabhängig eine straffe Sicherung des Flächengebildes ermöglicht.

Diese Aufgabe wird durch eine Schutzvorrichtung der eingangs genannten Art gelöst, bei der als Schalteinrichtung ein schwerkraftabhängig schaltbares Stellelement vorgesehen ist, das derart beweglich angeordnet ist, dass es durch die Bewegung der Rückenlehne in ihre Funktions- oder Liegeposition in unterschiedliche Endpositionen überführbar ist.

Die erfindungsgemässe Lösung eignet sich insbesondere für in vertikale Schutzpositionen ausziehbare Flächengebilde. In gleicher Weise ist ein Einsatz für horizontal ausziehbare Flächengebilde in Form von Abdeckplanen und ähnlichen Flächengebilden möglich.

Bei vertikal ausziehbarem Flächengebilde ist das Flächengebilde in seiner Länge so ausgelegt, dass es in der tieferen Funktionslage, insbesondere in einer umgeklappten Liegeposition der Rückenlehne, in seiner vertikalen Schutzposition zumindest nahezu vollständig ausgezogen ist.
Für die umgeklappte Liegeposition der Rückenlehne kann das Flächengebilde in seiner Schutzposition somit nahezu nicht mehr ausgebeult werden. Gleiches gilt auch für die höhere Funktionslage des Wickelgehäuses, insbesondere eine aufrechte Funktionsposition der Rückenlehne, da in dieser Position der Auszugweg des Flächengebildes durch die Steuereinrichtung begrenzt ist. Unabhängig von auf das Flächengebilde und die Wickelwelle auftretenden Beschleunigungen wird somit in jeder Funktionslage des Wickelgehäuses bei ausgezogenen und in die vertikale Schutzposition gebrachtem Flächengebilde ein straffer Rückhalt für im Laderaum befindliche Gegenstände, Tiere oder ähnliches geschaffen. Dies gewährleistet insbesondere auch, dass in das Flächengebilde gedrückte Gegenstände, die eine Beschleunigung auf die Wickelwelle unterhalb des Beschleunigungsgrenzwertes ausüben, dennoch sicher zurückgehalten werden, da das Flächengebilde in jedem Fall einen sicheren und strafferen Rückhalt schafft. Vorzugsweise ist das flexible Flächengebilde als grundsätzlich bekanntes Trennnetz gestaltet. Die Steuereinrichtung ist vorzugsweise durch mechanische Komponenten gebildet. Sie kann jedoch auch mit elektrischen oder elektronischen Sensor-, Zähl- und Auswertekomponenten versehen sein, die einen elektrischen Antrieb oder eine elektrische Bremsvorrichtung der Wickelwelle steuern können.

Die Steuereinrichtung weist eine mechanische Sperrvorrichtung auf, die für ein Blockieren der Wickelwelle vorgesehen ist. Dadurch wird ein besonders sicherer Rückhalt des Flächengebildes erzielt, wobei die mechanische Gestaltung einen einfachen Aufbau bei grosser Funktionssicherheit gewährleistet

Die Steuereinrichtung weist zudem ein schwerkraftabhängig schaltbares Stellelement auf, das derart beweglich angeordnet ist, dass es durch die Bewegung der Rückenlehne in ihre Funktions- oder Liegeposition in unterschiedliche Endpositionen überführbar ist. Das Stellelement ist derart gestaltet und gelagert, dass es sich zwangsläufig beim Verschwenken der Rückenlehne in die Funktionsposition oder der Liegeposition in unterschiedliche Endpositionen verstellt, in denen die Sperrvorrichtung entweder betätigt werden kann oder ausser Funktion bleibt.

In weiterer Ausgestaltung der Erfindung weist die Steuereinrichtung eine gehäusefeste oder wickelwellenseitige Kulissenspirale und einen entsprechend entgegengesetzt wickelwellenseitigen oder gehäusefesten, in die Kulissenspirale eingreifenden und radial beweglichen Kulissenfinger auf, und das Stellelement ist mit einer in der Kulissenspirale beweglich positionierten Stellweiche versehen. Je nachdem, wie die Stellweiche durch das schwerkraftabhängige Verstellen positioniert ist, läuft der Kulissenfinger in der Kulissenspirale ohne oder mit Inkraftsetzen der Sperrvorrichtung um.

In weiterer Ausgestaltung der Erfindung ist der Wickelwelle eine beschleunigungsabhängig betätigte Blockiervorrichtung zugeordnet, die unabhängig von der Sperrvorrichtung bei einem einen definierten Grenzwert überschreitenden Beschleunigungswert die Wickelwelle arretiert. Dadurch ist zusätzlich auch noch eine beschleunigungsabhängige, alternativ zu der Sperrvorrichtung wirkende Blockierung der Wickelwelle und des Flächengebildes in seiner vertikalen Schutzposition erzielbar. Vorzugsweise weist die beschleunigungsabhängig betätigbar Blockiervorrichtung ein Trägheitselement auf, das ein entsprechendes Blockierelement ansteuert. Der definierte Grenzwert wird abhängig von den Belastungen ermittelt, die bei einem Fahrzeugaufprall aufgrund in das aufgespannte Flächengebilde geschleuderter Gegenstände auf die Wickelwelle ausgeübt werden.

In weiterer Ausgestaltung der Erfindung sind die Sperrvorrichtung und/oder die Blockiervorrichtung derart gestaltet, dass bei einer Blockade der Wickelwelle zusätzlich eine formschlüssige Verkeilung mit einem Tragprofil des Kassettengehäuses erfolgt. Diese Ausgestaltung ist vorteilhaft, falls die auf das Flächengebilde einwirkenden Kräfte so groß sind, dass die Sperrvorrichtung oder die Blockiervorrichtung dieser Kraft nicht standhalten können. Durch die Verkeilung mit dem stabilen Tragprofil des Kassettengehäuses ist auch bei derart hohen Kräften ein formschlüssiger Rückhalt und eine Fortdauer der Blockier- oder Sperrfunktion erzielbar.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer Seitenansicht einen Kombi-Personenkraftwagen mit einer Ausführungsform einer erfindungsgemäßen Schutzvorrichtung, wobei sich das flexible Flächengebilde der Schutzvorrichtung bei aufrechter Funktionsposition der Rückenlehne in seiner vertikalen Schutzposition befindet,
- Fig. 2: den Kombi-Personenkraftwagen nach Fig. 1 mit umgeklappter Rückenlehne, wobei sich das flexible Flächengebilde in seiner vorderen, vertikalen Schutzposition befindet,
- Fig. 3: in vergrößerter, perspektivischer Darstellung die Schutzvorrichtung nach den Fig. 1 und 2 mit teilweise ausgezogenem Flächengebilde in Form eines Trennnetzes,
- Fig. 4: in einer Explosionsdarstellung die verschiedenen Einzelteile der auf die Wickelwelle einwirkenden Steuereinrichtung,
- Fig. 5: in weiterer Explosionsdarstellung eine Funktionsgruppe der Schutzvorrichtung nach den Fig. 1 bis 4,
- Fig. 6: in perspektivischer Explosionsdarstellung die Funktionsgruppe nach Fig. 5 unter Weglassung eines weiteren Einzelteiles,
- Fig. 7: in perspektivischer Explosionsdarstellung eine weitere Funktionsgruppe der Schutzvorrichtung in umgeklappter Liegeposition der Rückenlehne,
- Fig. 8: eine außenseitige Ansicht eines Funktionsteiles der Schutzvorrichtung,
- Fig. 9: eine Draufsicht auf die Steuereinrichtung nach den vorhergehenden Figuren in einer mit einem Tragprofil des Kassettengehäuses verkeilten Sperrposition,
- Fig. 10: in perspektivischer Darstellung eine weitere Ausführungsform einer erfindungsgemäßen Schutzvorrichtung im Fahrzeuginnenraum eines Kraftfahrzeugs,
- Fig. 11: in vergrößerter, perspektivischer Darstellung einen Ausschnitt der Schutzvorrichtung nach Fig. 10,
- Fig. 12: in schematischer, perspektivischer Darstellung eine weitere Ausführungsform einer erfindungsgemäßen Schutzvorrichtung mit horizontal ausziehbarem Flächengebilde und
- Fig. 13: in vergrößerter Darstellung ein Funktionsteil der Schutzvorrichtung nach Fig. 12.

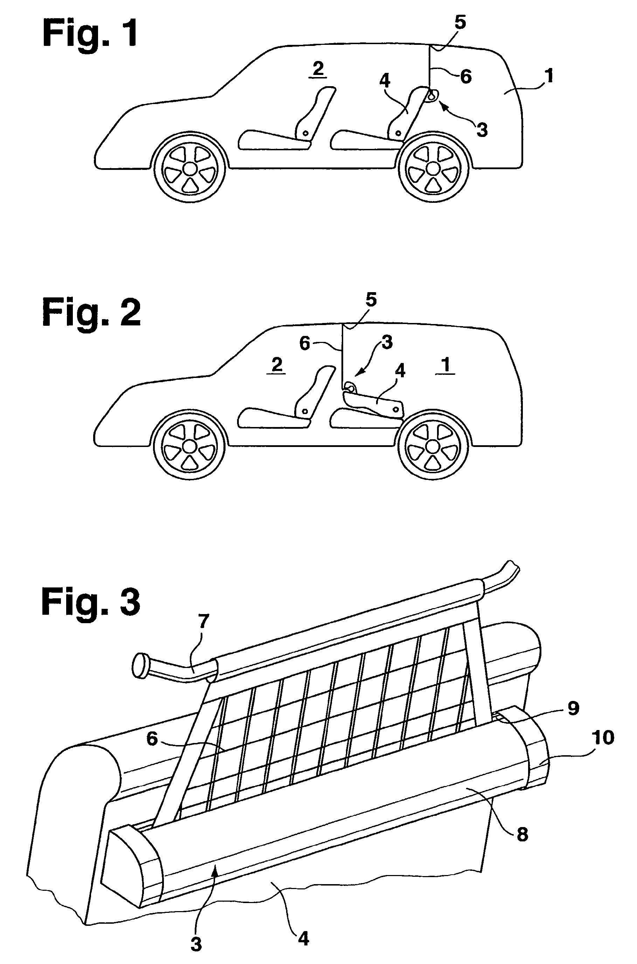

Ein Fahrzeug in Form eines Kombi-Personenkraftwagens gemäß den Fig. 1 und 2 weist heckseitig einen Laderaum 1 auf, der durch eine Schutzvorrichtung 3 von einem vorderen Fahrzeuginnenraum 2 abtrennbar ist. Die Schutzvorrichtung 3 weist gemäß Fig. 3 ein Kassettengehäuse auf, das rückseitig an einer Rückenlehne 4 einer Fondsitzbank lösbar befestigt ist. Das Kassettengehäuse ist mit einem stabilen Kassettenhohlprofil 8 versehen, das als Tragprofil im Sinne der Erfindung dient. Das Kassettenhohlprofil 8 ist im Bereich seiner gegenüberliegenden Stirnenden durch jeweils ein Seitenteil 10 verschlossen.

In dem Kassettengehäuse ist eine Wickelwelle 11 drehbar gelagert, auf der ein flexibles Flächengebilde in Form eines Trennnetzes 6 durch einen Schlitz 9 des Kassettengehäuses hindurch ausziehbar und aufrollbar gehalten ist. Ein vorderes Stirnende des Trennnetzes 6 ist mit einer Auszugleiste 7 versehen, die in fahrzeugfesten Halterungen 5 im Dachbereich des Fahrzeuginnenraumes in einer vertikal ausgezogenen Schutzposition verankerbar ist. Das Trennnetz 6 ist sowohl in der aufrechten Funktionsposition der Rückenlehne 4 (Fig. 1) als auch in der umgeklappten Liegeposition der Rückenlehne 4 (Fig. 2) in eine vertikale Schutzposition ausziehbar und an entsprechenden Halterungen 5 im Dachbereich festlegbar. Die Auszuglänge des Trennnetzes 6 ist so bemessen, dass das Trennnetz 6 in der umgeklappten Liegeposition der Rückenlehne 4 vollständig ausgezogen ist und somit lediglich noch mit dem wickelwellenseitig verankerten Stirnende in dem Kassettengehäuse positioniert ist. Dadurch ist eine straffe Schutzposition des Trennnetzes 6 gewährleistet.

In der aufrechten Funktionsposition der Rückenlehne 4 ist das Trennnetz 6 in seiner gemäß Fig. 1 dargestellten vertikalen Schutzposition lediglich teilweise ausgezogen. Der übrige Teil des Trennnetzes 6 ist auf der Wickelwelle 11 aufgerollt.

Auch in dieser Schutzposition des Trennnetzes 6 bei aufrecht stehender Rückenlehne 4 ist das Trennnetz 6 gegen einen weiteren Auszug begrenzt. Hierzu ist eine mechanische Steuereinrichtung vorgesehen, die nachfolgend näher beschrieben ist. Die Schutzvorrichtung 3 weist zudem weitere Funktionseinheiten auf, die ebenfalls nachfolgend beschrieben werden.

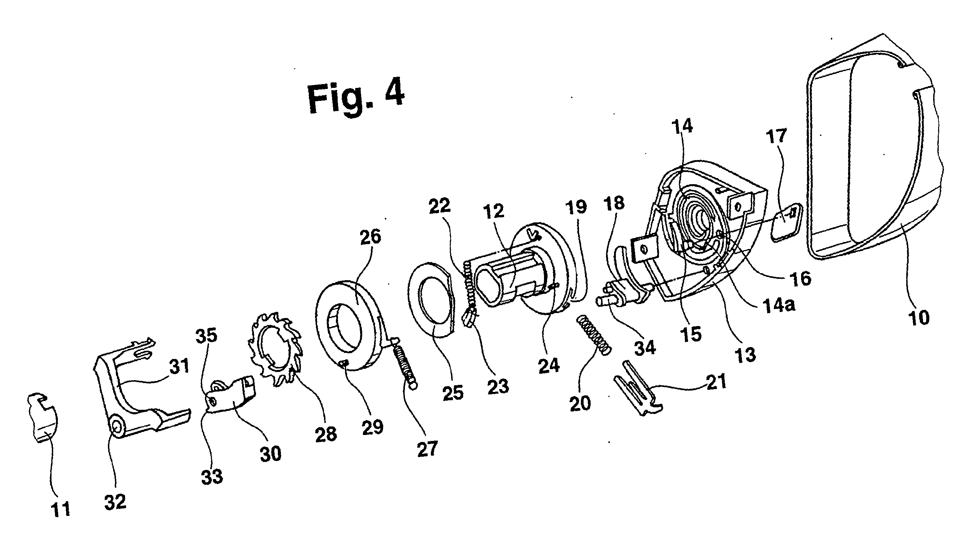

Anhand der Fig. 4 sind die Einzelteile der Steuereinrichtung wie auch der übrigen Funktionseinheiten der Schutzvorrichtung 3 erkennbar, die innerhalb des Kassettenhohlprofiles 8 und innerhalb des Seitenteiles 10 positioniert sind. Die Steuereinrichtung ist der Wickelwelle 11 zugeordnet, die anhand der Fig. 4 bis 6 in ihrem seitlichen Stirnbereich dargestellt ist.

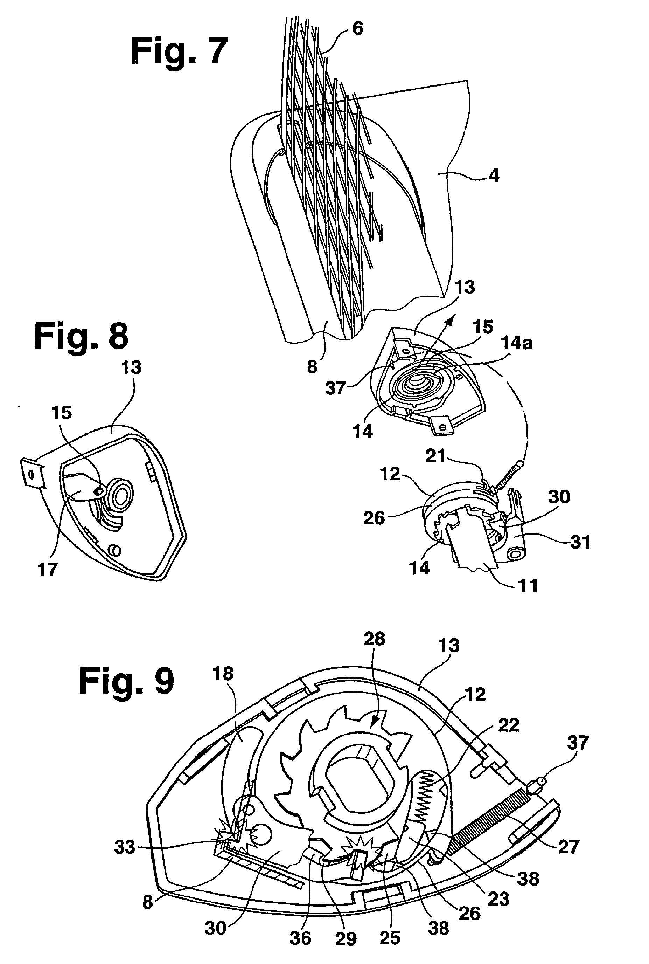

Stirnseitig drehschlüssig mit der Wickelwelle 11 verbunden ist eine Nabe 12, die mit einem Aufnahmebereich koaxial in die offene Stirnseite der Wickelwelle 11 eintaucht. Die Nabe 12 weist zudem einen Ringflansch auf, der mit einer Radialführung 19 für einen radial beweglichen Kulissenfinger 21 versehen ist. Dem Kulissenfinger 21 ist eine Druckfeder 20 zugeordnet, die sich innenseitig in der Führungsaufnahme 19 und außenseitig am Kulissenfinger 21 abstützt, so dass der Kulissenfinger 21 in seiner Funktionsposition radial nach außen federbelastet ist. Die Nabe 12 ist einschließlich ihres Ringflansches in einem stirnseitig mit dem Kassettenhohlprofil fest verbundenen Spiralgehäuse 13 gelagert. Das Spiralgehäuse 13 ist auf der dem Ringflansch zugewandten Seite mit einer koaxial um die Drehachse der Wickelwelle und der Nabe 12 angeordneten Spiralnut 14 versehen, die mit einer feststehenden, jedoch elastisch nachgiebigen, zungenförmigen Weiche 14a sowie mit einer schwenkbeweglichen Stellweiche 15 im Bereich einer radial weiter außenliegenden Windung versehen ist. Die Stellweiche 15 ist in einem korrespondierenden Durchtritt 16 des Spiralgehäuses 13 schwenkbeweglich gelagert, wobei der entsprechende Lagerzapfen der Stellweiche 15 ein Vierkantende aufweist, das zur gegenüberliegenden Seite aus der Wandung des Spiralgehäuses 13 heraustritt (Fig. 4 und 8). Auf dieses Vierkantende ist drehschlüssig ein Stellgewicht 17 aufgesetzt, dessen Schwerpunkt derart exzentrisch zu der Lagerachse der Stellweiche 15 positioniert ist, dass je nach Lage der Rückenlehne 4 eine schwerkraftabhängige Verschwenkung des Stellgewichtes 17 und demzufolge auch eine Verstellung der Stellweiche 15 erfolgt.

In Verlängerung des radial äußersten Windungsganges der Spiralnut 14 ist ein Schalthebel 18 schwenkbeweglich gelagert, der ein bogenförmiges Kurvenführungselement aufweist, das zu seinem freien Ende hin - im Uhrzeigersinn der Spiralnut 14 gemäß Fig. 4 gesehen - den radial äußersten Windungsgang der Spiralnut 14 überlagert. Der Schalthebel 18 ist um einen Lagerzapfen 34 parallel zur Stellweiche 15 in dem Spiralgehäuse 13 schwenkbeweglich gelagert. Das gegenüberliegende Ende des Lagerzapfens 34 ist in einer Lagerbuchse 32 eines Lagerbügels 31 schwenkbeweglich gelagert, der die gesamten Funktionsteile axial übergreift und über entsprechende, nicht näher bezeichnete Raststege fest in dem Spiralgehäuse 13 verankert ist.

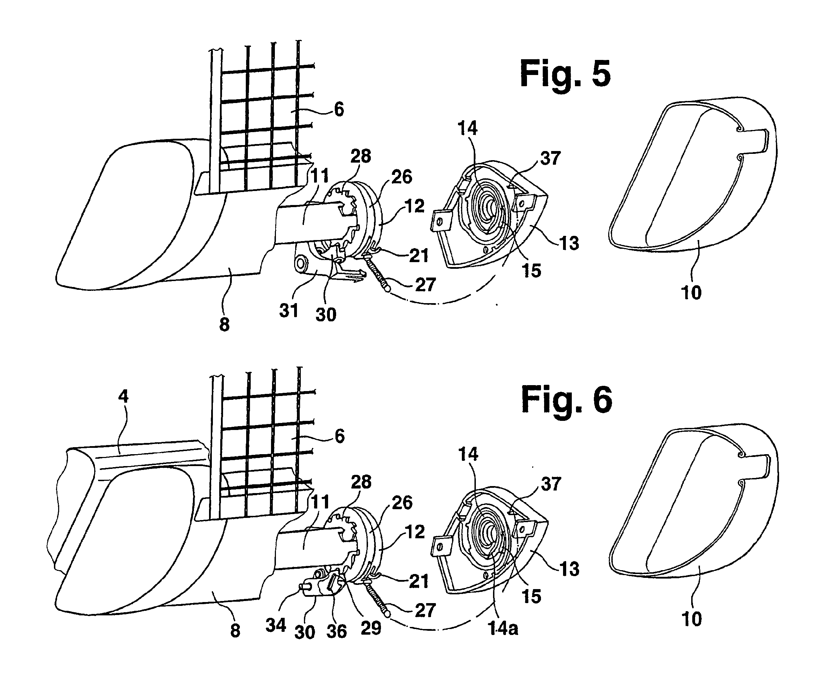

Auf der Nabe 12 ist zudem eine Trägheitsscheibe 25 drehbeweglich gelagert, der ein Blockierelement 23 zugeordnet ist, das auf einem Zapfen 24, der axial von dem Ringflansch der Nabe 12 abragt, schwenkbeweglich gelagert ist. Dem Blockierelement 23 ist eine Druckfeder 22 zugeordnet, die sich einerseits am Blockierelement 23 und andererseits an einem nicht näher bezeichneten Anschlag (siehe strichpunktierte Linie in Fig. 4) des Ringflansches der Nabe 12 abstützt. Die Trägheitsscheibe 25 ist unsymmetrisch gestaltet, indem sie auf einer Seite geradlinig abgetrennt ist. In diesem Kantenbereich liegt das Blockierelement 23 durch die Druckfeder 22 im normalen Betrieb der Steuereinrichtung an. Im normalen Funktionsbetrieb fungiert das Blockierelement 23 als Mitnehmer für die Trägheitsscheibe 25, indem sie die Drehung der Nabe 12 auf die Trägheitsscheibe 25 überträgt. Auf die Trägheitsscheibe 25 und auf die Nabe 12 axial aufgesetzt ist zudem ein Rastdeckel 26, der über eine Zugfeder 27 mit einem Anschlagnocken 37 des Spiralgehäuses (Fig. 5 bis 7 und 9) in Verbindung steht. Auf der der Trägheitsscheibe 25 und dem Blockierelement 23 zugewandten Innenseite weist der Rastdeckel 26 vom Mantelbereich aus nach innen ragende, gleichmäßig über den Umfang verteilte Rastzähne 27 (Fig. 9) auf, die bei einer Auslenkung des Blockierelementes 23 durch die Trägheitsscheibe 25 mit dem Blockierelement 23 in Eingriff geraten.

Axial anschließend an den Rastdeckel 26 ist eine Sperrklinkenscheibe 28 vorgesehen, die drehschlüssig auf der Nabe 12 gehalten ist. Hierzu sind entsprechende Nocken am Innenumfang der Sperrklinkenscheibe 28 vorgesehen, die in die Axialnuten (nicht näher bezeichnet) der Nabe 12 axial eingeschoben sind. Der Sperrklinkenscheibe 28 ist eine Sperrklinke 30 zugeordnet, die bügelförmig gestaltet ist und einen inneren, der Sperrklinkenscheibe 28 zugeordneten Flachschenkel sowie einen äußeren, dem Lagerbügel 31 zugeordneten Flachschenkel aufweist. Die Sperrklinke 30 ist auf dem Schalthebel 28 befestigt, indem sie auf den Lagerzapfen 34 mittels einer Bohrung 35 einerseits und auf einen kleineren, parallel zum Lagerzapfen 34 am Schalthebel 18 positionierten Haltezapfen andererseits mit einer weiteren Bohrung vom inneren Flachschenkel aufgesteckt ist. Der innere, in Fig. 4 nicht erkennbare, jedoch in Fig. 6 freigelegte Flachschenkel der Sperrklinke 30 weist zudem eine Kulissenführung 36 auf (Fig. 6 und 9), in die ein Kulissenzapfen 29 hineinragt, der axial ausgerichtet auf der der Sperrklinkenscheibe 28 zugeordneten Außenseite des Rastdeckels 26 angeordnet ist.

Durch die beschriebenen Teile sind verschiedene Funktionen erzielbar. So ist zum einen eine von der Auszuglänge des Trennnetzes 6 abhängige Sperrung der Wickelwelle erzielbar. Zum anderen ist eine beschleunigungssensitive Blockierung der Wickelwelle 11 erreichbar. Die von der Auszuglänge des Trennnetzes 6 abhängige Sperrung ist auf die aufrechte Funktionsposition der Rückenlehne 4 beschränkt. Die beschleunigungssensitive Blockierung hingegen ist unabhängig von der Lage der Rückenlehne 4 und somit funktionstüchtig sowohl in der aufrechten Funktionsposition als auch in der umgeklappten Liegeposition der Rückenlehne 4. Dies hat den Vorteil, dass gemäß einem nicht dargestellten Ausführungsbeispiel der Erfindung die Netzlänge des Trennnetzes 6 auch größer als die für die umgeklappte Liegeposition benötigte Auszuglänge sein kann. In der umgeklappten Liegeposition erfolgt zwar keine von der Auszuglänge abhängige Sperrung der ckelwelle mehr, da diese auf die aufrechte Funktionsposition der Rückenlehne 4 beschränkt ist. Dennoch ist ein sicherer Rückhalt bei einem Fahrzeugaufprall gewährleistet, da die beschleunigungssensitive Blockierung auch in der umgeklappten Liegeposition wirksam ist. Die Sperrung und die Blockierung arbeiten - wie nachfolgend noch näher erläutert werden wird - somit vollkommen unabhängig voneinander und sind nicht miteinander gekoppelt.

Zunächst wird das beschleunigungssensitive Blockierprinzip anhand der Zeichnungen beschrieben. Im normalen Funktionsbetrieb der Schutzvorrichtung dreht sich die Nabe 12 mit der Wickelwelle 11 mit, wohingegen der Rastdeckel 26, der auf der Nabe 12 drehbar gelagert ist, durch die Zugfeder 27 am feststehenden Spiralgehäuse 13 in Position gehalten wird. In dieser Ausgangsposition des Rastdeckels 26 ist der in die Kulissenführung 36 der Sperrklinke 30 hineinragende Kulissenstift 29 derart innerhalb der Kulissenführung 36 verschoben, das die Sperrklinke 30 in ihrem gegenüber der Sperrklinkenscheibe 28 entriegelten Zustand positioniert ist. Das Blockierelement 23 liegt mittels der Druckfeder 22 spielfrei an der Trägheitsscheibe 25 an. Sobald auf das Trennnetz 6 und damit auch auf die Wickelwelle eine Kraft ausgeübt wird, die oberhalb einer Ansprechschwelle der Blockiervorrichtung, d.h. oberhalb einer definierten Auszugsbeschleunigung liegt, bleibt die Trägheitsscheibe 25 aufgrund ihrer Masse gegenüber der Nabe 12 stehen, wodurch zwangsläufig das Blockierelement 23, das mit der Nabe 12 weiter umläuft, radial nach außen gelenkt wird. Dadurch gerät das Blockierelement 23 in Eingriff mit einem der Rastzähne 38 am Innenumfang des Mantels des Rastdeckels 26, wobei das Blockierelement 23 sich an dem dann momentan benachbarten Rastzahn 38 verkeilt. Dadurch wird der Rastdeckel 26 mitgenommen. Über den Kulissenstift 29 am Rastdeckel 26 wird zwangsläufig die Sperrklinke 30 ausgelenkt, indem sie in die Sperrverzahnung der Sperrklinkenscheibe 28 einsteuert. Beim Auftreffen der Sperrklinke 30 auf die Sperrverzahnung der Sperrklinkenscheibe 28 verkeilt sich die gesamte Mechanik, wodurch die Wickelwelle 11 blockiert wird.

Um in der aufrechten Funktionsposition der Rückenlehne 4 die Auszuglänge des Trennnetzes 6 zu begrenzen, wird die Stellweiche 15 durch das Stellgewicht 17 aufgrund der aufrechten Funktionsposition der Rückenlehne 4 zwangsläufig in eine einen äußeren, benachbarten Windungsgang sperrende, ausgelenkte Position verschwenkt (Fig. 6). In der vollständig auf der Wickelwelle 1 aufgerollten Ruheposition des Trennnetzes 6 befindet sich der Mitnehmerfinger 21 im Bereich der innersten Spiralwindung der Spiralnut 14 und wird durch die Druckfeder 20 gegen die Wandung dieser Spiralwindung gedrückt. Sobald nun das Trennnetz 6 nach oben ausgezogen wird, wandert der Kulissenfinger 21 im Uhrzeigersinn - auf die Darstellung nach den Fig. 5 und 6 bezogen - in den Windungen der Spiralnut 14 entlang. Die Stellweiche 15 befindet sich durch das Stellgewicht 17 in ihrer geschlossenen Stellposition. Sobald der Mitnehmerfinger 21 an der Stellweiche 15 entlang wandert, drückt er diese nach außen, wobei die Stellweiche 15 nach dem Weiterwandern des Mitnehmerfingers 21 in die geschlossene Stellposition zurückgeschwenkt wird. Dadurch kann der Mitnehmerfinger in der nächsten Spiralwindung außen an der geschlossenen Stellweiche entlang laufen. In der äußersten Spiralwindung gelangt der Mitnehmerfinger 21 in Anlage mit dem bogenförmigen Führungselement des Schalthebels 18, wodurch aufgrund der Druckkraft der Druckfeder 20 dieser bogenförmige Führungsteil nach außen gedrückt wird. Gleichzeitig wird hierdurch die fest mit dem Schalthebel 18 verbundene Sperrklinke 30 nach innen eingesteuert und verkeilt sich mit der Rastverzahnung der Sperrklinkenscheibe 28. Dadurch wird die gesamte Mechanik analog der zuvor beschriebenen Blockiervorrichtung gesperrt und die Wickelwelle 11 kann nicht mehr weiter gedreht werden. Hierdurch wird zwangsläufig ein weiterer Auszug des Trennnetzes 6 gesperrt. Durch die Spiralnut 14 wird eine Zähleinheit für die Umdrehung der Wickelwelle 11 geschaffen. Das Einlenken der Sperrklinke 30 abhängig von der Anzahl der Umdrehungen der Wickelwelle 11 ist derart auf die Auszuglänge des Trennnetzes 6 abgestimmt, dass die Auszuglänge des Trennnetzes 6 zum Zeitpunkt der Sperrung so groß ist, dass gerade eine Einhängung der Auszugleiste in den fahrzeugfesten Halterungen des Dachbereiches ermöglicht ist.

Um nun das Trennnetz 6 aus der begrenzten Position wieder im Kassettengehäuse aufrollen zu können, wird die Auszugleiste in einfacher Weise wieder aus den fahrzeugfesten Halterungen ausgehängt, wodurch die nicht näher dargestellte, auf die Wickelwelle 11 wirkende Rückholfeder das Trennnetz 6 unter Aufrollung auf der Wickelwelle 11 nach unten zieht. Dabei bewegt sich der Mitnehmerfinger 21 entgegen dem Uhrzeigersinn an der Spiralkontur entlang nach innen. Durch die Zugfeder 27 wird analog der zuvor beschriebenen Blockiervorrichtung die Sperrklinke 30 über den Kulissenstift 29 und die Kulissenführung 36 wieder ausgesteuert, wodurch sie die Sperrklinkenscheibe 28 freigibt. Im Gegenuhrzeigersinn läuft der Mitnehmerfinger 21 auf die feststehende, jedoch elastisch nachgiebige Weiche 14a auf, die im Uhrzeigersinn in einfacher Weise überlaufen worden war. Dadurch springt der Mitnehmerfinger an dieser Weiche 14a direkt auf die nächst innere Spiralwindung um, so dass gegenüber dem Auszug eine Spiralwindung eingespart wurde. Bis zum vollständig aufgerollten Zustand des Trennnetzes 6 läuft der Mitnehmerfinger 21 somit in der innersten Spiralwindung noch einmal komplett herum, springt auf die nächst höhere Windung um, um dann die ausstehende Umdrehung wieder am inneren Ende der inneren Spiralwindung zu beenden.

In der umgeklappten Liegeposition der Rückenlehne 4 ist das Stellgewicht 17 durch sein Eigengewicht derart verschwenkt, dass die Stellweiche 15 in ihrer offenen Stellung positioniert ist, in der eine äußere Spiralwindung gesperrt und der Mitnehmerfinger auf die nächst innere Spiralwindung zurückgezwungen wird. Dadurch kann der Mitnehmerfinger beim Ausziehen des Trennnetzes 6 nicht in die äußerste Spiralwindung einlaufen und den Schalthebel 18 betätigen, so dass das Trennnetz 6 ohne Begrenzung bis zu seinem Ende ausgezogen werden kann. Das erneute Aufrollen des Trennnetzes 6 aus der vertikalen Schutzposition bei umgeklappter Liegeposition der Rückenlehne 4 gemäß Fig. 7 erfolgt analog zu dem Aufrollvorgang bei aufrechter Funktionsposition der Rückenlehne 4 mit dem Unterschied, dass der Mitnehmerfinger 21 im Bereich der innersten Spiralwindung unter jeweiligem Springen auf die nächst äußere Spiralwindung mehrmals umläuft, bis das Trennnetz 6 vollständig aufgerollt ist.

Die Gestaltung der Spiralnut 14 und damit des Spiralgehäuses 13 ist für die verschiedenen, zu realisierenden Trennnetzauszuglängen bestimmend. Durch die Länge der Spiralnut 14 ist die Gesamtlänge des Trennnetzes 6 konstruktiv vorbestimmt. Die gestreckte Länge der innersten Spiralwindung definiert die möglichen Längenvariationen. Liegen entsprechende Toleranzen und Trennnetzlängenvarianten innerhalb dieses Längenbereiches der innersten Spiralwindung, so ist die Verwendung von ein und demselben Spiralgehäuse 13 für diese unterschiedlichen Trennnetzlängen möglich.

Um bei einer Sperrung oder Blockierung der Schutzvorrichtung durch die Sperrklinke 30 den Kräftefluss zu verbessern, ist gemäß den Fig. 4 und 9 rückseitig an der Sperrklinke 30 wenigstens ein Stützfortsatz 33 vorgesehen, der sich bei einer Sperrung in eine entsprechende Profilaussparung des Kassettenhohlprofiles 8 gemäß Fig. 9 verkeilen kann. Der Kraftfluss läuft somit vom Trennnetz aus über die Wickelwelle 11 zur Sperrklinkenscheibe 28, von dort auf die Sperrklinke 30 und dann in das Kassettenhohlprofil 8, wodurch eine besonders stabile Abstützung und damit Blockierung oder Sperrung erzielbar ist. Dies ist von Vorteil, falls die auftretenden Kräfte so groß sind, dass allein die Sperrklinke und die Sperrklinkenscheibe eine sichere Arretierung der Wickelwelle nicht gewährleisten können.

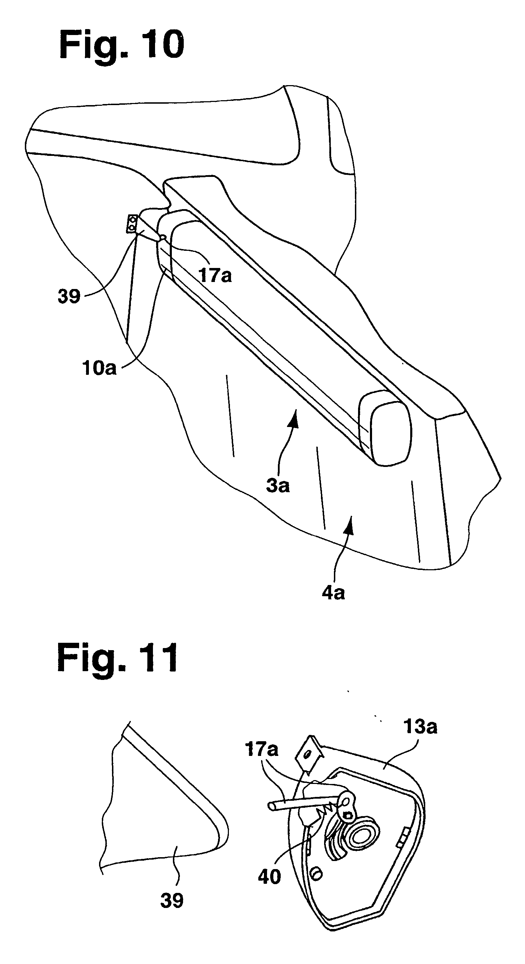

Beim Ausführungsbeispiel einer erfindungsgemäßen Schutzvorrichtung 3a nach den Fig. 10 und 11 ist die Steuereinrichtung bis auf die nachfolgend beschriebenen Unterschiede gemäß dem zuvor beschriebenen Ausführungsbeispiel gestaltet, wobei insbesondere bis auf die nachfolgend beschriebenen Unterschiede alle aus Fig. 4 erkennbaren Teile der Schutzvorrichtung vorhanden sind. Wesentlicher Unterschied bei der in den Fig. 10 und 11 dargestellten Schutzvorrichtung ist es, dass als Sensoreinrichtung zur Erfassung der Funktionslage des als Wickelgehäuse dienenden Kassettengehäuses das die Stellweiche 15 betätigende Schaltelement durch einen Sensorstift 17a gebildet ist, der die Stellweiche verschwenkt und nach Art eines Tasters aus dem Wickelgehäuse gemäß den Fig. 10 und 11 herausragt. Sobald das Wickelgehäuse an einem fahrzeugfesten Anschlag 39 in die betreffende Funktionslage gebracht ist, kommt der Sensorstift 17a an dem Anschlag 39 zur Anlage und wird in das Wickelgehäuse hinein nach innen gedrückt. Dadurch erfolgt die Verschwenkung der Stellweiche mit den beim zuvor beschriebenen Ausführungsbeispiel entsprechend auszuführenden Funktionen. Durch eine Federanordnung 40 wird der Sensorstift 17a wieder in seine aus dem Kassettengehäuse herausragende Ausgangslage zurückgedrückt, sobald die Belastung durch den Anschlag 39 entfernt ist. Sobald das Wickelgehäuse daher aus der am Anschlag 39 anliegenden Funktionslage entfernt wird, wird auch die Sensoreinrichtung wieder in die Ausgangslage zurückgedrückt. Unabhängig von Schwerkrafteinflüssen sind somit unterschiedliche Funktionslagen des Kassettengehäuses erfassbar und in die unterschiedlichen Auszuglängen des Flächengebildes umsetzbar, ohne dass die Kipplage des Kassettengehäuses hierzu verändert werden muss.

Selbstverständlich sind bei anderen Ausführungsbeispielen der Erfindung auch andere Arten von Sensoreinrichtungen vorgesehen, die mit entsprechenden Schalteinrichtungen in Verbindung stehen, um die unterschiedlichen Auszugvorgänge für das Flächengebilde abhängig von der erfassten Funktionslage des Kassettengehäuses einzuleiten.

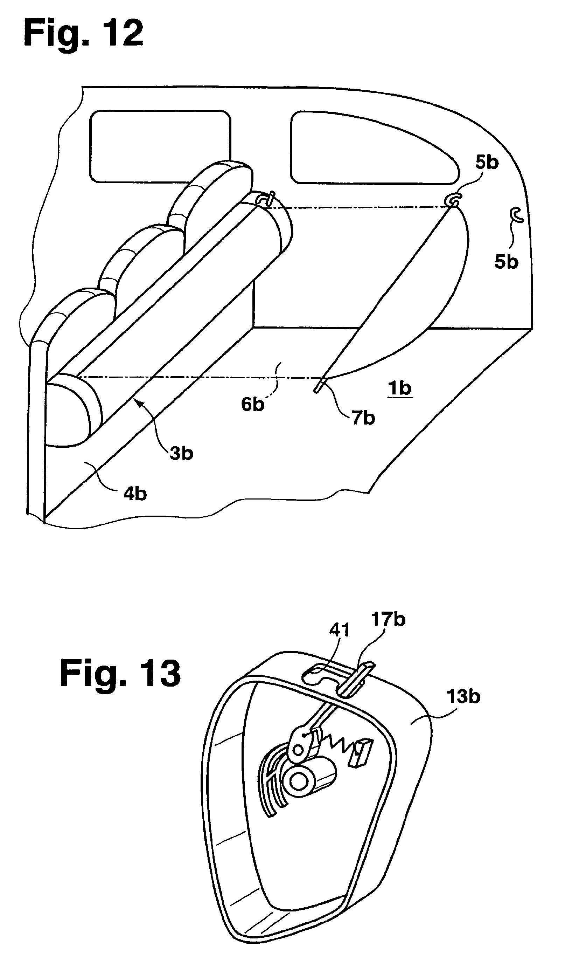

Beim Ausführungsbeispiel nach den Fig. 12 und 13 ist eine Schutzvorrichtung 3b mit einen horizontal ausziehbaren Flächengebilde in Form einer Abdeckplane 6b im Bereich eines Laderaumes 1b eines Kraftfahrzeuges vorgesehen. Ein Wickelgehäuse der Schutzvorrichtung 3b ist im Bereich einer Rückenlehne 4b positionniert, wobei das Wickelgehäuse entweder in karosserieseitigen Halterungen oder in Halterungen der Rückenlehne fahrzeugfest gesichert ist. Die Abdeckplane 6b ist in zwei unterschiedliche Schutzpositionen ausziehbar, die durch die in den Seitenwandungen vorgesehenen, fahrzeugseitigen Aufnahmen 5b definiert sind. Die Steuereinrichtung und die Schalteinrichtung entsprechen im wesentlichen den zuvor anhand der Figuren 10 und 11 und im übrigen den durch die Fig. 1 bis 9 offenbarten Ausführungsbeispielen, so dass für eine nähere Erläuterung auf die dortige Beschreibung verwiesen wird. Einziger Unterschied bei der Schutzvorrichtung nach den Fig. 12 und 13 ist es, dass die Schalteinrichtung hier nicht zwangsgesteuert durch entsprechende Positions- oder Lageerfassung geschaltet wird, sondern manuell durch einen Betätigungsstift 17b, der mittels einer in dem deckelförmigen Seitenteil 13b vorgesehenen Kulissenführung 41 in den entsprechenden Schaltzustand überführbar und in diesem sicherbar ist. Im übrigen bewirkt der Betätigungstift 17b je nach Schaltzustand die aus dem Ausführungsbeispiel nach den Fig. 10 und 11 bekannte Begrenzung oder Freigabe des Auszugweges des horizontalen Flächengebildes in Form der Abdeckplane 6b.

Zur Sicherung in den fahrzeugseitigen Aufnahmen 5b weist die Abdeckplane 6b an ihrem vorderen Stirnende ein Konturteil auf, das seitlich mit Einhängehaken 7b in Verlängerung einer Auszugleiste des formstabilen Konturteiles versehen ist.

## Patentansprüche

1. Schutzvorrichtung zur Sicherung eines Laderaumes in einem Fahrzeuginnenraum mit einer in einem Wickelgehäuse drehbar gelagerten Wickelwelle, auf der ein flexibles Flächengebilde ausziehbar und aufrollbar gehalten ist, das in wenigstens eine kurze und wenigstens eine lange Schutzposition ausziehbar und fahrzeugfest verankerbar ist, mit einer Schalteinrichtung (17, 17a, 17b) zum Auswählen einer der jeweiligen Schutzposition entsprechenden Sollposition des Flächengebildes sowie mit einer Steuereinrichtung, die die Umdrehungen der Wickelwelle (11) erfasst und abhängig von der ausgewählten Sollposition den Auszugweg für das Flächengebilde (6) auf eine entsprechende Länge begrenzt oder für einen vollständigen Auszug freigibt und die eine mechanische Sperrvorrichtung (15, 17, 18, 28, 30) aufweist, die für ein Blockieren der Wickelwelle (11) vorgesehen ist, wobei das Wickelgehäuse an einer klappbaren Rückenlehne angeordnet ist, **dadurch gekennzeichnet, dass** als Schalteinrichtung ein schwerkraftabhängig schaltbares Stellelement (15, 17) vorgesehen ist, das derart beweglich angeordnet ist, dass es durch die Bewegung der Rückenlehne in ihre Funktions- oder Liegeposition in unterschiedliche Endpositionen überführbar ist.

2. Schutzvorrichtung nach Anspruch 1, wobei das Wickelgehäuse in wenigstens zwei bezüglich ihrer Fahrzeuginnenraumhöhe unterschiedlichen Funktionslagen fahrzeugfest positionierbar ist und wobei das Flächengebilde in beiden Funktionslagen des Wickelgehäuse in wenigstens eine vertikale Schutzposition ausziehbar und fahrzeugfest verankerbar ist, **dadurch gekennzeichnet, dass** die Steuereinrichtung eine Sensoreinrichtung zur Erfassung der Funktionslage des Wickelgehäuses aufweist, die mit der Schalteinrichtung zum Freigeben oder Begrenzen des Auszugweges des Flächengebildes verbunden ist.

3. Schutzvorrichtung nach Anspruch 1, **dadurch gekennzeichnet, dass** die Steuereinrichtung eine gehäusefeste oder wickelwellenseitige Kulissenspirale (14) und einen entsprechend entgegengesetzt wickelwellenseitigen oder gehäusefesten, in die Kulissenspirale (14) eingreifenden und radial beweglichen Kulissenfinger (21) aufweist, und dass das Stellelement mit einer in der Kulissenspirale (14) beweglich positionierten Stellweiche (15) versehen ist.

4. Schutzvorrichtung nach Anspruch 1, **dadurch gekennzeichnet, dass** der Wickelwelle (11) eine beschleunigungsabhängig betätigte Blockiervorrichtung (23, 25, 26, 28, 30, 38) zugeordnet ist, die unabhängig von der Sperrvorrichtung bei einem einen definierten Grenzwert überschreitenden Beschleunigungswert die Wickelwelle (11) arretiert.

5. Schutzvorrichtung nach Anspruch 4, **dadurch gekennzeichnet, dass** die Blockiervorrichtung ein Trägheitselement (25) aufweist.

6. Schutzvorrichtung nach Anspruch 4, **dadurch gekennzeichnet, dass** die Sperrvorrichtung und/oder die Blockiervorrichtung derart gestaltet sind, dass bei einer Blockade der Wickelwelle (11) zusätzlich eine formschlüssige Verkeilung mit einem Tragprofil (8) des Kassettengehäuses erfolgt.

7. Schutzvorrichtung nach Anspruch 4, **dadurch gekennzeichnet, dass** die Sperrvorrichtung oder die Blockiervorrichtung eine Sperrklinke (30) sowie eine drehschlüssig mit der Wickelwelle (11) verbundene Sperrklinkenscheibe (28) aufweisen, wobei die Sperrklinke (30) durch den Kulissenfinger (21) oder das Trägheitselement (25) direkt oder indirekt ansteuerbar ist.

8. Schutzvorrichtung nach Anspruch 7, **dadurch gekennzeichnet, dass** die Steuereinrichtung derart gestaltet ist, dass die Sperrklinke (30) aktiv in eine Zahnlücke der Sperrklinkenscheibe (28) eingesteuert wird.

## Claims

1. Protective device for securing a loading space in a vehicle interior, having a winding roller rotatably mounted in a winding housing, on which winding roller a flexible flat structure is mounted so as to be extendable and rollable, the flat structure being extendable into at least one short and at least one long protective position and being anchorable, rigidly fixed to the vehicle, having a switching device (17, 17a, 17b) for selecting a desired position of the flat structure corresponding to the respective protective position as well as a control device, which detects the rotations of the winding roller (11) and, depending on the selected desired position, limits the pull-out travel of the flat article (6) to a corresponding length or releases it for complete extension, and which control device comprises a mechanical locking device (15, 17, 18, 28, 30) that is provided for blocking the winding roller (11), wherein the winding housing is arranged on a hinged backrest, **characterised in that** a gravity-dependent switchable actuator element (15, 17) is provided as switching device, which is movably arranged in such way that it can be transferred into different end positions by moving the backrest into its functional or lying position.

2. Protective device according to claim 1, wherein the winding housing is positionable, rigidly affixed to the vehicle, in at least two different functional positions with respect to the height of the vehicle interior, and wherein the flat structure, in both functional positions of the winding housing, is extendable into at least one vertical protective position and is anchorable, rigidly affixed to the vehicle, **characterised in that** the control device comprises a sensor device for detecting the functional position of the winding housing, the sensor device being connected to the switching device for releasing or limiting the pull-out travel of the flat structure.

3. Protective device according to claim 1, **characterised in that** the control device comprises a spiral slideway (14) built into the housing or located on the winding roller end and a sliding finger (21) located correspondingly oppositely on the winding roller end or built into the housing, which sliding finger engages in the spiral slideway (14) and is radially movable, and **in that** the actuator element is provided with an actuating switch (15) positioned movably in the spiral slideway (14).

4. Protective device according to claim 1, **characterised in that** a blocking device (23, 25, 26, 28, 30, 38) actuated in dependence on acceleration is associated with the winding roller (11), which blocking device arrests the winding roller (11) independently of the locking device at an acceleration value exceeding a defined limit value.

5. Protective device according to claim 4, **characterised in that** the blocking device comprises an inertial element (25).

6. Protective device according to claim 4, **characterised in that** the locking device and/or the blocking device are designed in such a way that, when the winding roller (11) is blocked, additionally a positive-locking wedging occurs with a support profile (8) of the box-form housing.

7. Protective device according to claim 4, **characterised in that** the locking device or the blocking device comprises a catch (30) as well as a ratchet disc (28) rotatably connected to the winding roller (11), the catch (30) being directly or indirectly controllable by the sliding finger (21) or the inertial element (25).

8. Protective device according to claim 7, **characterised in that** the control device is designed in such a way that the catch (30) is actively guided into a tooth space of the ratchet disc (28).

## Revendications

1. Dispositif de protection pour protéger un espace de chargement dans un habitacle de véhicule automobile comprenant un arbre d'enroulement monté de manière à pouvoir tourner dans un boîtier d'enroulement, sur lequel une structure plane flexible peut être étirée et déroulée, qui peut être étirée dans une position de protection courte et au moins longue et peut être ancrée fixement dans le véhicule, avec un dispositif de commutation (17, 17a, 17b) pour sélectionner une position théorique de la structure plane correspondant à la position de sécurité respective ainsi qu'un dispositif de commande qui détecte les rotations de l'arbre d'enroulement (11) et en fonction de la position théorique sélectionnée délimite le trajet d'étirement de la structure plane (6) sur une longueur correspondante ou la libère pour un étirement complet et qui présente un dispositif d'arrêt mécanique (15, 17, 18, 28, 30) prévu pour bloquer l'arbre d'enroulement (11), le boîtier d'enroulement étant disposé sur un dossier rabattable, **caractérisé en ce qu'**un élément de commande (15, 17) commutable en fonction de la gravité est prévu comme dispositif de commutation qui est ainsi placé de manière mobile qu'il peut passer par le mouvement du dossier dans sa position fonctionnelle ou allongée dans différentes positions finales.

2. Dispositif de protection selon la revendication 1, dans lequel le boîtier d'enroulement peut être positionné dans au moins deux positions fonctionnelles différentes par rapport à leur hauteur dans l'habitacle de véhicule automobile et dans lequel la structure plane, dans les deux positions fonctionnelles du boîtier d'enroulement, peut être étirée dans au moins une position de protection verticale et est ancrée fixement dans le véhicule, **caractérisé en ce que** le dispositif de commande comprend un dispositif de capteur pour détecter la position fonctionnelle du boîtier d'enroulement qui est reliée au dispositif de commutation pour libérer ou délimiter le trajet d'étirement de la structure plane.

3. Dispositif de protection selon la revendication 1, **caractérisé en ce que** le dispositif de commande présente une spirale à coulisse (14) fixée sur le boîtier ou côté arbre d'enroulement et un doigt à coulisse (21) également côté arbre d'enroulement ou fixé sur le boîtier de manière opposée qui se met en prise dans la spirale à coulisse (14) et est mobile radialement et que l'élément de réglage est muni d'un aiguillage de réglage (15) positionnable de manière mobile dans la spirale à coulisse (14).

4. Dispositif de protection selon la revendication 1, **caractérisé en ce que** l'arbre d'enroulement (11) a un dispositif de blocage (23, 25, 26, 28, 30, 38) actionné en fonction de l'accélération, qui bloque l'arbre d'enroulement (11) indépendamment du dispositif de blocage lorsqu'une valeur d'accélération dépasse une valeur limite prédéfinie.

5. Dispositif de protection selon la revendication 4, **caractérisé en ce que** le dispositif de blocage présente un élément d'inertie (25).

6. Dispositif de protection selon la revendication 4, **caractérisé en ce que** le dispositif d'arrêt et/ou le dispositif de blocage sont ainsi formés qu'en cas de blocage de l'arbre d'enroulement (11), il se produit en plus un calage par solidarité de forme avec un profilé porteur (8) du boîtier à cassette.

7. Dispositif de protection selon la revendication 4, **caractérisé en ce que** le dispositif d'arrêt et/ou le dispositif de blocage présentent un cliquet d'arrêt (30) ainsi qu'un disque de cliquet d'arrêt (28) relié en rotation à l'arbre d'enroulement (11), le cliquet d'arrêt (30) pouvant être commandé directement ou indirectement par le doigt à coulisse (21) ou l'élément d'inertie (25).

8. Dispositif de protection selon la revendication 7, **caractérisé en ce que** le dispositif de commande est ainsi formé que le cliquet d'arrêt (30) est commandé de manière active dans un entredent du disque de cliquet d'arrêt (28).
